# EUROPÄISCHE PATENTSCHRIFT

(11) **EP 0 418 768 B1**
(45) Veröffentlichungstag und Bekanntmachung des Hinweises auf die Patenterteilung: **14.12.1994**
(21) Anmeldenummer: 90117810.3
(22) Anmeldetag: 15.09.1990
(51) Int. Cl.: B26F 1/44, B23P 15/40, B24B 19/20

(54) **Stanzblech und Verfahren zu seiner Herstellung**
Stamping die and method of manufacture
Matrice profilée et procédé pour sa fabrication

(30) Priorität: 22.09.1989 CH 3463/89
(43) Veröffentlichungstag der Anmeldung: 27.03.1991
(60) Teilanmeldung: 94108595.3
(73) Patentinhaber: ELECTRO OPTIC AG, FL-9490 Vaduz (LI)
(72) Erfinder: Helferich, Fritz, FL-9495 Triesen (LI)
(74) Vertreter: Büchel, Kurt F., Dr.

(56) Entgegenhaltungen:
- EP-A- 0 297 324
- EP-A- 0 321 590
- DE-U- 8 911 403
- GB-A- 885 622
- US-A- 2 467 302
- US-A- 2 645 000
- US-A- 3 000 237
- US-A- 3 585 881
- US-A- 3 952 179
- US-A- 4 543 750

## Beschreibung

Die Erfindung betrifft ein Stanzblech nach dem Oberbegriff des Anspruches 1. Ein solches Stanzblech kann verschiedenen Zwecken dienen, wird aber insbesondere zum Stanzen von Etiketten aus Papier oder anderem Folienmaterial verwendet. Damit die Etiketten einwandfrei ausgestanzt werden können, müssen die Stanzkanten besonders geschärft sein. Dieses Schärfen der Kanten, das nach der Erzeugung der gewünschten Konturen mittels Reliefätzen oder anderen gebräuchlichen, spanabhebenden Herstellungsarten geschieht, erfolgt im allgemeinen manuell durch Abziehen mit Schleif- und Schabewerkzeugen oder auch maschinell. Das Problem bei derartig hergestellten Stanzblechen besteht darin, das zum einwandfreien Ausstanzen nötige, gleiche Sollmass des Stanzbleches (Normal-Abstand der Stanzkante von der Rückseite des Stanzbleches) für alle Stanzkanten zu erreichen. Allein beim maschinellen Schärfen der Stanzkanten wird infolge der vorhandenen Blechtoleranzen diese Forderung nicht erfüllt; dem manuellen Nachschleifen sind aus Gründen der Arbeitsintensität natürliche Grenzen gesetzt.

Aufgabe der Erfindung ist ein Stanzblech zu schaffen, das für alle Stanzkanten das gleiche Sollmass aufweist. Diese Aufgabe wird durch die im Anspruch 1 beschriebenen Merkmale gelöst. Mögliche und verbesserte Ausführungsformen des erfindungsgemässen Stanzbleches sind in den Ansprüchen 2, 3 und 4 beschrieben. Besonders zweckmässig ist die Herstellung des Stanzbleches nach den Ansprüchen 5 bis 8.

Dabei ist wesentlich, dass das Stanzblech an seiner Rückseite entweder zusätzlich in bisher unüblicher Weise abtragend bearbeitet ist, was sich gegebenenfalls in einer Gefügeänderung des Blechmaterials ausweist, oder dass das ursprüngliche Trägerblech mit einer unterschiedlich dicken Schicht belegt ist.

In der EP-A-0 321 590 wird ein Verfahren zum Herstellen eines eine scharfe Schneidkante aufweisenden Stanzwerkzeuges beschrieben. Dabei werden durch Ätzen oder auf andere Weise hergestellte Grate durch einen Hämmervorgang mit einer scharfen Schneidekante versehen. Die Höhentoleranzen der Schneidkanten hängen dabei vorwiegend von den Toleranzen beim Hämmervorgang ab.

Bei dem dem Stand der Technik entsprechenden, ersten Schritt der Herstellung von Stanzblechen wird das Ausgangsblech mit Ätzresistmasken belegt und danach zur Erzeugung der die Stanzkanten tragenden Stege einem Reliefätzverfahren unterworfen. Das Blech wird dabei auf eine Tiefe von ca. 0.3 mm ausgenommen. Die so entstandenen Stege haben einen ungefähr trapezförmigen Querschnitt. Bei einer nachfolgenden Feinätzung wird überhängendes Material abgetragen, die Stanzkantenschärfe aber nicht wesentlich verbessert. Die Stanzkanten müssen deswegen scharf nachgeschliffen werden. Das ist auf unterschiedliche Weise möglich; so werden z.B. nach der DE-A-3618768 auf dem Ausgangsblech zwei Ätzresistmasken unterschiedlichen Materials erst durch Tiefenätzung und dann durch Feinätzung entfernt, so dass scharfe Stanzkanten entstehen. Aber hier, wie auch in den üblichen NC-gesteuerten maschinellen Verfahren, sind dem Erreichen der für das Sollmass geforderten Toleranz Grenzen gesetzt. Dieses Sollmass, d.h. der geforderte Normal-Abstand zwischen Stanzkante und Rückseite des Stanzblechs muss für alle Stanzkanten gleich sein, da beim Anpressen des Stanzblechs alle Stanzkanten die Etikettenschicht in gleicher Weise ganz durchdringen müssen, wobei die Trägerfolie nicht angeritzt werden darf. So ist z.B. für die gebräuchlichsten Dicken der Trägerfolien von 0.05 bis 0.15 mm und einer Dicke der Etikettenschicht von ca. 0.1 mm für das Sollmass eine Toleranz von 0.02, vorzugsweise 0.005mm erwünscht.

Für verschiedene Materialien, vor allem solche mit Kunststoffkaschierung, sind Stanzbleche wünschenswert, für die in jedem Fall eine Höhentoleranz von 0.005 mm gefordert wird. Zusätzlich ist gerade für diese Art von Stanzblechen die Güte der Schneidekante von wesentlicher Bedeutung. Die Kantenbreite ist, je nach der Ausbildung der Kante, unterschiedlich definiert. So wird für abgerundete Kanten darunter der kürzeste Abstand zwischen den beiden Flanken verstanden, an der Stelle, wo die Flankenneigung in die Kantenkrümmung übergeht. Für an der Schneide mehr oder weniger flache Kanten wird die Kantenbreite als der kürzeste Abstand definiert, der durch die Schnittpunkte der oberen Kantenfläche bzw. der an sie parallel zum Stanzblech gelegten Tangente mit den beiden Flanken bzw. deren Fluchtlinien festgelegt ist.

Die Kantenbreite, die die Schärfe der Kante bestimmt, muss für derartige Stanzbleche jedenfalls weniger als 0.005 mm betragen, ein Wert, der durch die aus dem Stand der Technik bekannten Verfahren, insbesondere infolge der gleichzeitigen Forderung nach einer Höhentoleranz von 0.005 mm, nicht verwirklicht werden konnte. Denn das nach dem Ätzen mit einem Übermass versehene Stanzblech wird zwar mit der erforderlichen Toleranz auf das Sollmass geschliffen, infolge der dabei aufgrund der Blech- und Ätztoleranzen resultierenden, unterschiedlichen Breite der Stirnfläche der Stanzkanten wird aber, sowohl bei händischem als auch bei NC-gesteuertem Schärfen, entweder - bei eingehaltener Höhentoleranz - eine der Forderung nach einer maximalen Breite von 0,005 mm entsprechende Kante, oder aber, bei entsprechend korrektem Scharfschliff der Stanzkanten, das Höhensollmass mit der erforderlichen Toleranz nicht erreichbar sein.

Bei dem erfindungsgemässen Stanzblech ist die Sollhöhe auf die geforderte Toleranz eingestellt, wobei diese Einstellung vollautomatisch geschehen kann. Erfindungsgemäss geschieht das dadurch, dass beim maschinellen Bearbeiten der Stanzkanten das Sollmass auf entweder ausschliesslich positive oder ausschliesslich negative Toleranz eingestellt wird. Ein Stanzblech mit Stanzkanten positiver Toleranz wird dann, dem erfindungsgemässen Verfahren entsprechend, auf seiner Rückseite abtragend behandelt. Dieses Verfahren hat den Vorteil, dass das Sollmass leicht eingestellt werden kann (durch auf Maxima einstellbare Differenzmessung, oder ähnliche geeignete Messungen) und, dass kontrolliert grossflächig für alle Stanzkanten das evtl. vorhandene Übermass auf der Rückseite abgetragen werden kann. Als Abtragungsmethode hat sich Läppen als besonders geeignet gezeigt, da es durch Folgewechseln der Läppplatte, der Läpprichtung und des Läppmittels äusserst genau durchführbar ist, doch sind andere Methoden möglich, z.B. Flachschleifen, galvanisches Abtragen, Laserbearbeitung usw.

Alternativ dazu ist ein Auffüllen der Untermasse, die beim Schleifen der Stanzkanten mit negativer Toleranz entstehen, mit einer Schicht von z.B. Kunststoff, der aus einer Flüssig-Zweikomponentenphase aushärtet, möglich. Das kontrollierte Auffüllen der Rückseite auf das Sollmass mit der geforderten Toleranz ermöglicht nötigenfalls auch ein auf das Auffüllen mit Übermass folgendes Fein-Nachschleifen.

Um diesen Abtragungs- bzw. Auffüllvorgang kontrolliert und justiert durchführen zu können, werden die Stanzbleche auf eine genau plane Halteplatte aufgebracht, sodass die Stanzkanten auf dieser aufliegen und das Stanzblech fixiert ist. Das kann entweder magnetisch, oder mit Hilfe von Vakuum oder ganz einfach mittels Haltestiften erfolgen. Das Aufbringen des Stanzblechs auf einen Magnetzylinder kann für weitere Arbeitsvorgänge von Vorteil sein.

Das Einbringen von Distanzplättchen auf die Flächen zwischen den Stegen ist besonders bei Vakuum- oder Magnetfixierung für die folgenden Bearbeitungsschritte von Vorteil, um einem zu starken Einbuchten der Zwischenflächen entgegen zu wirken.

Auf das Einbringen von Distanzplättchen, das in jedem Fall mindestens einen zusätzlichen Arbeitsschritt bedeutet, kann verzichtet werden, wenn als Halteplatte bzw. Haltezylinder eine regulierbare Magnetplatte bzw. ein regulierbarer Magnetzylinder vorgesehen wird. In gleicher Weise kann - bei Verwendung von Vakuum - das Regulieren der Haltekraft über unterschiedlich hohe Vakua erfolgen. Damit wird, je nach Blechmaterial und Abstand der einzelnen Stanzkanten, die für den folgenden Schleif- bzw. Läpp- oder auch Auftragevorgang erforderliche Haltekraft bereitgestellt, ohne dass die Zwischenflächen infolge unnötig hoher Haltekräfte eingebuchtet werden.

Das nach dem erfindungsgemässen Verfahren hergestellte Stanzblech zeichnet sich durch scharfe Stanzkanten aus - die Breite liegt unter 0,005 mm - bei gleichzeitig maximaler Maschinengenauigkeit des Sollmasses. Dieses Sollmass, das rein maschinell auf die oben beschriebene Weise erreicht wird, wird allerdings aufgrund von - dem maschinellen Herstellungsverfahren inhärenten - Maschinentoleranzen bestimmt, wodurch sich eventuell eine Nachbearbeitung der Stanzkanten an verschiedenen Stellen als notwendig erweist.

Bis jetzt war eine Nachkorrektur des Stanzbleches an den Stanzkanten in der Praxis an der Druckmaschine nicht möglich. Mit Hilfe eines Werkzeuges ist jedoch sogar eine stellenweise Höhenkorrektur möglich, unter Beibehaltung der bereits vorhandenen, den erforderlichen Toleranzen entsprechenden, Stanzkantenschärfe. Das Werkzeug besteht aus zwei in einem Halter zusammengefassten HM-(Hartmetall-) Stiften, die an ihren jeweiligen Enden gegengleiche, gekrümmte Seitenflächen aufweisen. Sind diese Flächen als Kugelkalotten ausgeformt, so ist ihre Fertigung in der gewünschten Genauigkeit problemlos. Die unteren Stirnflächen der beiden HM-Stifte sind zur Längserstreckung der Stifte senkrechte Flächen geringer Krümmung, die aus fertigungstechnischen Gründen vorzugsweise plan sind. Dadurch wird bei der korrigierenden Bearbeitung der Stanzkanten ein Aufliegen der HM-Stifte auf der Oberfläche der Zwischenräume vermieden. Eine den Übergang zwischen diesen Stirnflächen und den Seitenflächen darstellende Rundkante mit entsprechend kleinem Krümmungsradius verhindert das Entstehen einer Kerbe an der Stanzkantenflanke bei eventuell nachlässigem Aufsetzen des Werkzeugs.

Stellt man fest, beispielsweise bei einer Probestanzung oder bei Einstellung des Stanzwerkes der Druckmaschine, dass an unterschiedlichen Stellen des Stanzbleches Gegenkorrekturen notwendig sind, so wird das Werkzeug an diesen Stellen drückend, der Stanzkante entlang, geführt. Dabei wird die Schneide der Stanzkante infolge der Krümmung der Seitenflächen und der Neigung der Stanzkanten-Flanken vom Werkzeug höchstens umfasst und keinesfalls breitgedrückt. Wird das Werkzeug der Stanzkante entlang drückend bewegt, so wird Druck nur auf die Flanken der Stanzkante, knapp unterhalb der Kante, ausgeübt. Dabei kommt es, je nach Werkzeug, zu einem Aufdrücken und damit einer Erhöhung der Stanzkanten oder einem Andrücken und damit einer Erniedrigung der Stanzkanten. Die Werkzeuge zum Aufdrücken bzw. Andrücken - für die Bearbeitung von Stanzkanten mit gleichen Flankenneigungen - unterscheiden sich dabei nur in der Grösse der Winkel, den die jeweiligen End-Seitenflächen des Werkzeugs miteinander einschliessen.

Weitere Einzelheiten ergeben sich anhand der nachfolgenden Beschreibung von in der Zeichnung schematisch dargestellten Ausführungsbeispielen. Es zeigen:
- Fig. 1: einen Schnitt durch ein Stanzblech, eine Etikettenschicht und eine Trägerfolie;
- Fig. 2: einen Schnitt durch ein Stanzblech mit positiver Toleranz;
- Fig. 3: einen Schnitt durch das Stanzblech der Fig. 2, auf einer Haltefläche;
- Fig. 4: einen Schnitt durch ein Stanzblech mit negativer Toleranz;
- Fig. 5: einen Schnitt durch das Stanzblech der Fig. 4, auf einer Haltefläche und
- Fig. 6: einen Schnitt durch ein Stanzblech auf einem Haltezylinder.

Alle Figuren sind als schematisch anzusehen und nicht massstabgetreu; sie werden zusammenhängend beschrieben; gleiche Teile sind mit gleichen Bezugsziffern versehen, ähnliche Teile mit gleichen Bezugsziffern, aber mit verschiedenen Indizes.

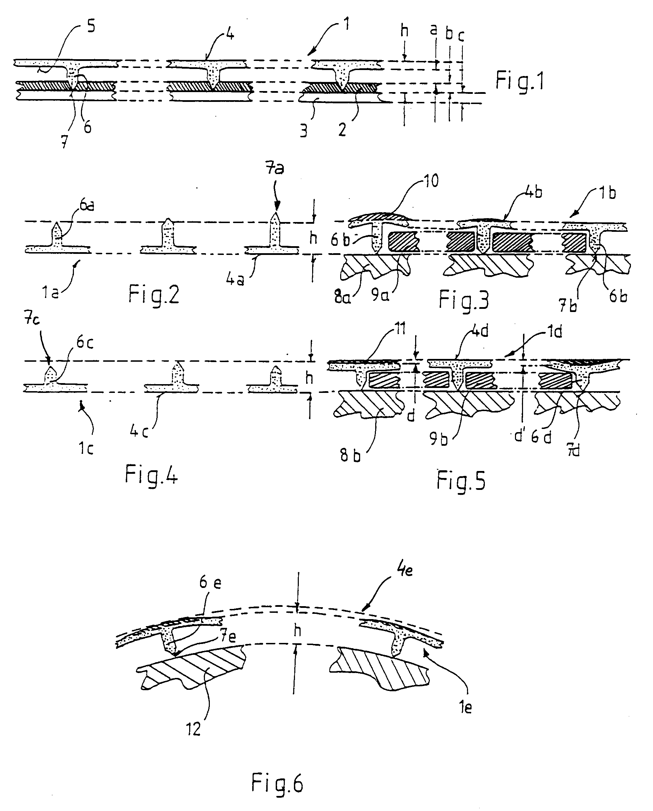

Aus Fig. 1 sind die Bedingungen beim Stanzen von Etiketten zu sehen. Auf einer Trägerfolie 3 ist eine Etikettenschicht 2 aufgebracht. Das Stanzblech 4 schneidet mit den Stanzkanten 7 seiner Stege 6 die Etiketten aus der Etikettenschicht 2. Die Stanzkanten 7 müssen beim Anpressen des Stanzblechs 1, was mittels einer (nicht dargestellten) Platte oder Walze geschieht, die Etikettenschicht 2 ganz durchdringen, wobei die Trägerfolie 3 nicht angeritzt werden darf. Es ist ersichtlich, dass das Sollmass h, d.h. der Sollabstand zwischen Stanzkanten 7 und Rückseite 4 des Stanzblechs 1, für alle Stanzkanten 7 gleich sein muss. Für die gebräuchlichsten Dicken c der Trägerfolien 3 von 0.05 - 0.15 mm und einer Dicke b der Etikettenschicht von ca. 0.1 mm ist für das Sollmass h eine Toleranz von 0.02, vorzugsweise 0.005 mm erwünscht. Das heisst, dass das Sollmass innerhalb der erwünschten Toleranzbreite liegt. Der Hohlraum (a) zwischen der Vorderseite 5 des Stanzblechs 1 und der Oberfläche der Etikettenschicht 2 wird durch die Führung der (nicht dargestellten) Platten, bzw. Walzen, durch die das Stanzblech 1 auf die Etikettenschicht 2 gedrückt wird, bestimmt.

Fig. 2 zeigt ein Stanzblech 1a, dessen Stanzkanten 7a mit positiver Toleranz bearbeitet wurden. Ein solches Stanzblech 1b wird, wie in Fig. 3 dargestellt, mit seinen Stanzkanten 7b auf einer Halteplatte 8a ausgerichtet. Dabei kann es sich für die weitere Bearbeitung als zweckmassig erweisen, zwischen die Halteplatte 8a und die freien Bereiche zwischen den Stegen 6b Distanzplättchen 9a einzubringen. Die Dimensionierung dieser Distanzplättchen 9a wird durch etwas verkleinerte Etikettenabmessungen in Länge und Breite bestimmt sein, während die Dicke höchstens der Summe aus dem Abstand a und der Dicke der Etikettenschicht b entsprechen kann, aber jedenfalls grösser als b sein sollte. Das Stanzblech 1b wird nun auf der Halteplatte 8a fixiert, z.B. magnetisch, mittels Vakuum oder durch Haltestifte.

Werden Halteplatten mit veränderbarer Magnetkraft verwendet, so kann auf das Einbringen von Distanzplättchen verzichtet werden.

Dann wird die Rückseite 4b des Stanzblechs 1b mittels einer genau parallel zur Halteplatte 8a justierten Schleifscheibe auf das Sollmass h abgeschliffen.

Entsprechend der Fig. 4 werden die Stanzkanten 7c eines Stanzblechs 1c mit jetzt negativer Toleranz bearbeitet. Analog zur oben beschriebenen Verfahrensweise werden die Stanzkanten 7d der Stege 6d, evtl. bei vorherigem Einbringen der Distanzplättchen 9b, auf einer gerichteten Halteplatte 8b geeignet fixiert (Fig. 5). In diesem Fall muss nun, um das geforderte Sollmass h zu erhalten, auf die Rückseite 4d des Stanzbleches 1d eine Schicht 11 aufgebracht werden. Denkbar ist das Aufbringen einer Schicht 11 von Kunststoff, der aus einer Flüssig-Zweikomponentenphase aushärtet. Bevorzugt ist dabei ein Auffüllen, das genau auf das Mass der Sollhöhe h erfolgt. Sollte jedoch ein Nachschleifen auf die Sollhöhe h nötig sein, so kann dies z.B. in oben beschriebener Weise grossflächig und einfach justierbar erfolgen.

Wie in Fig. 6 dargestellt, sind anstelle von flächigen Halteplatten 8a, 8b auch Haltezylinder 12 möglich. Solche Haltezylinder, die vorzugsweise Magnetzylinder mit einstellbarer Magnetkraft sein können, gestatten das bogenförmige Aufspannen des Stanzbleches 1e, wobei das anschliessende Abtragen der Rückseite 4e auf einer Rundschleifmaschine erfolgt.

Ein auf diese Weise hergestelltes Stanzblech wird also eine höchstmögliche Genauigkeit besitzen, die einzig durch die Toleranzen der Maschinen bestimmt ist. Es kann sein, dass das Höhensollmass - bei einer garantierten Kantenbreite unter 0.005 mm - dann immer noch nicht die geforderten Toleranzen von 0.005 mm aufweist. Aber auch unter der Voraussetzung, dass das maschinell hergestellte Stanzblech den Toleranzforderungen für das Höhensollmass entspricht, kann es beim Ausstanzen der Etiketten zu einem unerwünscht ungleichmässigen Stanzvorgang kommen. Die Stanzbleche werden um einen Magnetzylinder gewickelt und auf die auf eine Trägerfolie aufgebrachte Etikettenschicht gepresst. Je nach der Anordnung der Stanzkanten auf der Zylinderoberfläche wird der Anpressdruck auf die Etikettenschicht unterschiedlich sein. So werden insbesondere die in Laufrichtung verlaufenden Stanzkanten einen geringeren Anpressdruck ausüben als die dazu senkrecht liegenden. Mittels einer Probestanzung oder auch bei Einstellung des Stanzwerkes auf der Druckmaschine kann geprüft werden, wo die Trägerfolie angeritzt wird, wo die Etikettenschicht nicht ganz durchschnitten wird und wo der Stanzvorgang korrekt vor sich geht. Das heisst aber, dass eine nachbearbeitende Gegenkorrektur sich als notwendig erweisen wird, die mit Hilfe eines Werkzeuges - von Hand - genau definiert möglich wird.

Ein solches Werkzeug, kann reduzierend oder erhöhend wirksam sein, und auch in beispielsweise computergesteuerten CNC-Maschinen zum Einsatz gelangen.

## Patentansprüche

1. Stanzblech (1) aus Stahlblech, welches mindestens einen von der Vorderseite (5) abragenden, jeweils eine Stanzkante (7) tragenden Steg (6) besitzt, wobei - über die Längserstreckung des Steges - der Normal-Abstand der Stanzkante (7) von der Rückseite (4) des Stanzblechs (1) um ein Sollmass (h) mit einer Toleranz von höchstens 0.04 mm variiert, dadurch gekennzeichnet, dass auf der Rückseite (4) in mindestens einem Bereich der Stege (6) Material abgetragen oder aufgefüllt ist.

2. Stanzblech (1) nach Anspruch 1, auf dessen Rückseite (4) Material abgetragen ist, dadurch gekennzeichnet, dass das Gefüge des Stahlmaterials in mindestens einem Bereich der Stege (6) an der Rückseite (4) im Querschnittsschliff gegenüber den angrenzenden Bereichen verändert ist.

3. Stanzblech (1) nach Anspruch 1 oder 2, dadurch gekennzeichnet, dass es in mindestens einem Bereich der Rückseite (4) mit mindestens einer Schicht (11) von unterschiedlicher Dicke (d) belegt ist.

4. Stanzblech (1) nach einem der vorhergehenden Ansprüche, dadurch gekennzeichnet, dass der Normal-Abstand der Stanzkante (7) von der Rückseite (4) des Stanzbleches (1) eine Toleranz von höchstens 0.02, vorzugsweise weniger als 0.005 mm aufweist und die Stanzkanten (7) höchstens 0.01, vorzugsweise höchstens 0.005 mm - insbesondere höchstens 0.001 mm - breit sind.

5. Verfahren zur Herstellung eines Stanzbleches (1) nach einem der Ansprüche 1 bis 4, wobei auf einem Ausgangsblech wenigstens ein eine Stanzkante (7) tragender Steg (6) erzeugt und die Stanzkante (7) manuell oder maschinell bearbeitet wird, dadurch gekennzeichnet, dass der Normal-Abstand auf eine positive Toleranz eingestellt und anschliessend das Übermass auf der Rückseite (4) durch Abtragen oder Spanen mit geometrisch unbestimmter Schneidenform abgetragen wird.

6. Verfahren nach Anspruch 5, dadurch gekennzeichnet, dass der Normal-Abstand durch Materialauftrag auf der Rückseite (4) des Stanzbleches (1) auf eine positive Toleranz eingestellt wird.

7. Verfahren zur Herstellung eines Stanzbleches (1) nach einem der Ansprüche 1 bis 4, wobei auf einem Ausgangsblech wenigstens ein eine Stanzkante (7) tragender Steg (6) erzeugt und die Stanzkante (7) manuell oder maschinell bearbeitet wird, dadurch gekennzeichnet, dass der Normal-Abstand auf eine negative Toleranz eingestellt und anschliessend das Untermass durch Materialauftrag auf der Rückseite (4) aufgefüllt wird.

8. Verfahren nach einem der Ansprüche 5 bis 7, dadurch gekennzeichnet, dass das Stanzblech (1) auf einer Halteplatte (8a;8b) - vorzugsweise durch Magnetkraft, Vakuum oder Haltestifte, insbesondere mit regulierbarer Haltekraft - fixiert wird, wobei die Stanzkante (7) gegen die Halteplatte (8a;8b) gerichtet ist und vorzugsweise beidseitig des Steges (6) Distanzplättchen (9) eingebracht werden.

## Claims

1. A punching sheet (1) of steel sheet which has at least one web (6) which projects from the front side (5) an which carries a respective punching edge (7), wherein the normal spacing of the punching edge (7) from the rear side (4) of the punching sheet (1) varies by an ideal dimension (h) - along the web - with a tolerance of not more than 0.04 mm, characterised in that material is removed or added on the rear side (4) in at least one region of the webs (6).

2. A punching sheet (1) according to claim 1, on the rear side (4) of which material is removed, characterised in that the structure of the steel material is changed in the ground cross section in at least one region of the webs (6) at the rear side (4) in relation to the adjoining regions.

3. A punching sheet (1) according to claim 1 or claim 2 characterised in that in at least one region of the rear side (4) it is covered with at least one layer (11) of different thickness (d).

4. A punching sheet (1) according to one of the preceding claims characterised in that the normal spacing of the punching edge (7) from the rear side (4) of the punching sheet (1) has a tolerance of not more than 0.02, preferably less than 0.005 mm, and the punching edges (7) are not more than 0.01, preferably not more than 0.005 mm, in particular not more than 0.001 mm, in width.

5. A process for the production of a punching sheet (1) according to one of claims 1 to 4 wherein at least one web (6) carrying one punching edge (7) is produced on a starting sheet and the punching edge (7) is processed manually or by machine, characterised in that the normal spacing is set to a positive tolerance and then the excess dimension is removed on the rear side (4) by grinding or lapping with geometrically undefined form of cutting edge.

6. A process according to claim 5 characterised in that the normal spacing is set to a positive tolerance by applying material to the rear side (4) of the punching sheet (1).

7. A process for the production of a punching sheet (1) according to one of claims 1 to 4 wherein at least one web (6) carrying a punching edge (7) is produced on a starting sheet and the punching edge (7) is processed manually or by machine, characterised in that the normal spacing is set to a negative tolerance and then the undersize is made up by applying material on the rear side (4).

8. A process according to one of claims 5 to 7 characterised in that the punching sheet (1) is fixed on a holding plate (8), preferably by magnetic force, vacuum or holding pins, in particular with a regulatable holding force, wherein the punching edge (7) is directed towards the holding plate (8a; 8b) and spacer plates (9) are preferably introduced on both sides of the web (6).

## Revendications

1. Matrice de découpage (1) en tôle d'acier comprenant au moins une nervure (6) qui fait saillie depuis sa face avant (5) et qui porte à chaque fois une arête de découpage (7), la distance normale de l'arête de découpage (7) par rapport à la face arrière (4) de la matrice de découpage (1) variant autour d'une cote théorique (h) - le long de la nervure - avec une tolérance de 0,04 mm au plus, caractérisée par le fait que de la matière est enlevée sur la face arrière (4) ou que celle-ci est rechargée en matière dans au moins une région des nervures (6).

2. Matrice de découpage (1) selon la revendication 1 sur la face arrière (4) de laquelle de la matière est enlevée, caractérisée par le fait que la structure de l'acier en coupe métallographique transversale est modifiée sur la face arrière (4) dans au moins une région des nervures (6) par rapport aux zones adjacentes.

3. Matrice de découpage (1) selon la revendication 1 ou 2, caractérisée par le fait que, dans une région au moins de la face arrière (4), elle est revêtue d'au moins une couche (11) dont l'épaisseur (d) est différente.

4. Matrice de découpage (1) selon l'une des revendications précédentes, caractérisée par le fait que la distance normale de l'arête de découpage (7) par rapport à la face arrière (4) de la matrice de découpage (1) présente une tolérance de 0,02 mm au plus, et de préférence inférieure à 0,005 mm, et que la largeur des arêtes de découpage (7) est au plus de 0,01 mm, de préférence au plus de 0,005 mm, et en particulier au plus de 0,001 mm.

5. Procédé pour la fabrication d'une matrice de découpage (1) selon l'une des revendications 1 à 4, dans lequel au moins une nervure (6) portant un arêt de découpage (7) est engendrée sur une tôle de départ, et l'arêt de découpage (7) est usiné à la main ou à la machine, caractérisé par le fait que l'on règle la distance normale sur une tolérance positive, et que l'on enlève ensuite la surépaisseur sur la face arrière (4) par rectification, ou par enlévement de matière en forme geometriquement indeterminée.

6. Procédé selon la revendication 5, caractérisé par le fait que l'on règle la distance normale sur une tolérance normale positive par application de matière sur la face arrière (4) de la matrice de découpage (1).

7. Procédé pour la fabrication d'une matrice de découpage (1) selon l'une des revendications 1 à 4, dans lequel au moins une nervure (6) portant un arêt de découpage (7) est engendrée sur une tôle de départ, et l'arêt de découpage (7) est usiné à la main ou à la machine, caractérisé par le fait que l'on règle la distance normal sur une tolérance négative et que l'on recharge ensuite la sous-épaisseur par application de matière sur la face arrière (4).

8. Procédé selon l'une des revendications 5 à 7, caractérisé par le fait que la matrice de découpage (1) est fixée sur une plaque de maintien (8a; 8b) - de préférence par une force magnétique, par le vide ou par des tiges de serrage, et en particulier avec une force de maintien réglable - les arêtes de découpage (7) étant dirigées vers la plaque de maintien (8a; 8b) et des plaquettes d'espacement (9) étant de préférence des deux cotées de la nervure.
